# EUROPEAN PATENT APPLICATION

(11) **EP 2 452 992 A1**
(43) Date of publication of application: **16.05.2012**
(21) Application number: 10797129.3
(22) Date of filing: 06.07.2010
(51) Int. Cl.: C09J 133/06, C09J 4/00, C09J 7/02, G11B 7/26

(54) **ENERGY RAY-CURABLE PRESSURE-SENSITIVE ADHESIVE COMPOSITION AND PRESSURE-SENSITIVE ADHESIVE SHEET FOR INSPECTING STAMPERS**

(30) Priority: 06.07.2009 JP 2009159425
(71) Applicant: LINTEC Corporation, Tokyo 173-0001 (JP)
(72) Inventor: KASHIO Mikihiro, Tokyo 173-0001 (JP); KAMESHIMA ATSUKO, Tokyo 173-0001 (JP)
(74) Representative: Beckmann, Claus
(86) International application number: PCT/JP2010/061470
(87) International publication number: WO 2011/004818

(57) **Abstract**

Disclosed is an energy ray-curable pressure-sensitive adhesive composition comprising a polymer component and an energy ray polymerization initiator, the polymer component being (A) a (meth)acrylate copolymer that includes a hydroxyl group or an energy ray-curable functional group in its molecule and has a mass average molecular weight of 500,000 to 1,000,000, and a content of components having a molecular weight of 2,000,000 or more in the polymer component being 15 mass% or less. Also disclosed is a pressure-sensitive adhesive sheet for inspecting stampers comprising a substrate sheet and an energy ray-curable pressure-sensitive adhesive layer formed on the substrate sheet using said energy ray-curable pressure-sensitive adhesive composition. According to the present invention, the energy ray-curable pressure-sensitive adhesive composition that exhibits excellent adhesion to a substrate sheet and excellent durability and is able to be separated and removed easily from an adherend without leaving any residual material can be formed. And also a pressure-sensitive adhesive sheet for inspecting stampers comprising an energy ray-curable pressure-sensitive adhesive layer formed by using said composition is provided.

## Description

### TECHNICAL FIELD

The present invention relates to an energy ray-curable pressure-sensitive adhesive composition that is useful as a material for forming a pressure-sensitive adhesive layer of a pressure-sensitive adhesive sheet (or a pressure-sensitive adhesive label) used in the field of optics (e.g., optical recording material), and a pressure-sensitive adhesive sheet for inspecting stampers that includes an energy ray-curable pressure-sensitive adhesive layer formed on a resin film using the pressure-sensitive adhesive composition.

### BACKGROUND ART

An optical recording material that includes an optical recording substrate, an information recording layer formed on the optical recording substrate, and a polycarbonate film (protective film) bonded to the information recording layer is known.

As a method of producing the optical recording material, a method of forming an information recording layer on an optical recording substrate using a stamper is known.
If a stamper used in the above method has some defects, the resulting optical recording material also has defects, and causes a heavy loss. Therefore, it is desirable to inspect a stamper and confirm if the stamper satisfies a given standard before producing an optical recording material.

As a method for inspecting a stamper, a method using a pressure-sensitive adhesive sheet for inspecting stampers to maintain a clean surface after inspection and reduce a signal variation has been proposed (Patent Document 1).

Since it is difficult to directly apply a pressure-sensitive adhesive composition to a substrate sheet (e.g., polycarbonate film), the stamper inspection pressure-sensitive adhesive sheet has been produced by a transfer coating method wherein a pressure-sensitive adhesive layer is formed on a release film, and transferred onto a polycarbonate film (Patent Document 2).

However, since the pressure-sensitive adhesive sheet disclosed in Patent Document 2 is originally produced as a material for an optical recording medium (not as a pressure-sensitive adhesive sheet for inspecting stampers), the pressure-sensitive adhesive sheet is not taken account of removability from a base layer of a disk. Therefore, when the pressure-sensitive adhesive sheet is used for inspecting a stamper, the pressure-sensitive adhesive component remains on the stamper, and the stamper may not accurately form unevenness on disks.

### RELATED-ART DOCUMENT

### PATENT DOCUMENT

Patent Document 1: JP-A-2008-041165
Patent Document 2: JP-A-2008-192200

### SUMMARY OF THE INVENTION

### PROBLEMS TO BE SOLVED BY THE INVENTION

The present invention was conceived in view of the above situation. An object of the invention is to provide an energy ray-curable pressure-sensitive adhesive composition that exhibits excellent adhesion to a substrate sheet (e.g., polycarbonate film) and excellent durability, and is able to be separated and removed easily from an adherend (especially a stamper) without leaving any residual material, and a pressure-sensitive adhesive sheet for inspecting stampers that includes an energy ray-curable pressure-sensitive adhesive layer formed of the pressure-sensitive adhesive composition.

### MEANS FOR SOLVING THE PROBLEMS

The inventors of the present invention conducted extensive studies in order to achieve the above object. As a result, the inventors found that, when a pressure-sensitive adhesive sheet includes an energy ray-curable pressure-sensitive adhesive layer formed on a release film using an energy ray-curable pressure-sensitive adhesive composition that includes an energy ray polymerization initiator and a (meth)acrylate copolymer including a hydroxyl group or an energy ray-curable functional group and having a specific mass average molecular weight and a specific molecular weight distribution, the pressure-sensitive adhesive sheet exhibits excellent adhesion to a substrate sheet and excellent durability, and is able to be separated and removed easily from an adherend without leaving any residual material. This finding has led to the completion of the invention.

According to a first aspect of the present invention, an energy ray-curable pressure-sensitive adhesive composition described in (1) to (5) below is provided.
(1) An energy ray-curable, pressure-sensitive adhesive composition including a polymer component and an energy ray polymerization initiator, the polymer component being (A) a (meth)acrylate copolymer that includes a hydroxyl group or an energy ray-curable functional group in its molecule and has a mass average molecular weight of 500,000 to 1,000,000, and the content of components having a mass average molecular weight of 2,000,000 or more in the polymer component being 15 mass% or less.
(2) The energy ray-curable pressure-sensitive adhesive composition according to (1), further including (B) an oligomer having a mass average molecular weight of 1000 to 15,000.
(3) The energy ray-curable pressure-sensitive adhesive composition according to (2), wherein the oligomer (B) is a compound that includes two or more energy ray-curable functional groups and a carbonic ester structure in its molecule.
(4) The energy ray-curable pressure-sensitive adhesive composition according to (2) or (3), wherein the mass ratio of the (meth)acrylate copolymer (A) to the oligomer (B) is 90:10 to 50:50.
(5) The energy ray-curable pressure-sensitive adhesive composition according to any one of (1) to (4), further including (C) a (meth)acrylate monomer having an alicyclic structure.

According to a second aspect of the present invention, a pressure-sensitive adhesive sheet for inspecting stampers described in (6) below is provided.
(6) A pressure-sensitive adhesive sheet for inspecting stampers including a substrate sheet and an energy ray-curable pressure-sensitive adhesive layer formed on the substrate sheet using the energy ray-curable pressure-sensitive adhesive composition according to any one of (1) to (5).

### EFFECTS OF THE INVENTION

According to the energy ray-curable pressure-sensitive adhesive composition according to the first aspect of the present invention, an energy ray-curable pressure-sensitive adhesive layer that exhibits excellent adhesion to a substrate sheet and excellent durability, and is able to be separated and removed easily from an adherend without leaving any residual material can be formed.
Since the stamper inspection prcssure-scnsitivc adhesive sheet according to the second aspect of the present invention includes an energy ray-curable pressure-sensitive adhesive layer formed of the energy ray-curable pressure-sensitive adhesive composition according to the first aspect of the present invention, the pressure-sensitive adhesive sheet exhibits excellent adhesion to a substrate sheet and excellent durability, and is able to be separated and removed easily from an adherend without leaving any residual material. Thus, the pressure-sensitive adhesive sheet is particularly useful as a sheet for inspecting an optical disk stamper.

### BRIEF DESCRIPTION OF THE DRAWINGS

FIG. 1 is a cross-sectional view of the layer configuration of a pressure-sensitive adhesive sheet for inspecting stampers according to one embodiment of the invention.
FIG. 2 is a cross-sectional view showing a process of inspecting a stamper using a pressure-sensitive adhesive sheet for inspecting stampers according to one embodiment of the invention.
FIG. 3 is a cross-sectional view showing a process of inspecting a stamper using a pressure-sensitive adhesive sheet for inspecting stampers according to one embodiment of the invention.

### DESCRIPTION OF EXEMPLARY EMBODIMENTS

An energy ray-curable prcssure-sensitive adhesive composition and a pressure-sensitive adhesive sheet for inspecting stampers according to embodiments the present invention are described in detail below.

### 1) Energy ray-curable pressure-sensitive adhesive composition

An energy ray-curable pressure-sensitive adhesive composition according to one embodiment of the present invention includes a polymer component and an energy ray polymerization initiator, the polymer component being (A) a (meth)acrylate copolymer that includes a hydroxyl group or an energy ray-curable functional group in the molecule and has a mass average molecular weight of 500,000 to 1,000,000, and the content of the components having a mass average molecular weight of 2,000,000 or more in the polymer component being 15 mass% or less.

### Polymer component

In the energy ray-curable pressure-sensitive adhesive composition according to one embodiment of the present invention, the (meth)acrylate copolymer (A) (i.e., the polymer component) is a copolymer that includes a hydroxyl group and a repeating unit derived from a (meth)acrylate monomer in the molecule (hereinafter may be referred to as "(meth)acrylate copolymer (A1)"), or a copolymer that includes an energy ray-curable functional group and a repeating unit derived from a (meth)acrylate monomer in the molecule (hereinafter may be referred to as "(meth)acrylate copolymer (A2)").

The term "(meth)acrylic acid ester" used herein refers to an acrylic acid ester or a methacrylic acid ester. The term "(meth)acrylate" used herein refers to an acrylate, or a methacrylate.

### (Meth)acrylate copolymer (A1)

The (meth)acrylate copolymer (A1) is a copolymer that includes a repeating unit derived from a hydroxyl group-containing monomer and a repeating unit derived from a (meth)acrylate monomer in the molecule.

The hydroxyl group-containing monomer is a monomer that includes a polymerizable double bond and a hydroxyl group in the molecule. The (meth)acrylate copolymer can be crosslinked by a crosslinking agent as described below due to the presence of a hydroxyl group.

Specific examples of the hydroxyl group-containing monomer include hydroxyl group-containing acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, and 6-hydroxyhexyl (meth)acrylate. These hydroxyl group-containing monomers may be used either individually or in combination.

Specific examples of the (meth)acrylate monomer include alkyl (meth)acrylates with an alkyl group having 1 to 18 carbon atoms; cycloalkyl (meth)acrylates such as cyclopropyl acrylate, cyclopropyl methacrylate, cyclopentyl acrylate, cyclopentyl methacrylate, cyclohexyl acrylate, and cyclohexyl methacrylate; and aralkyl (meth)acrylates such as benzyl acrylate, benzyl methacrylate, phenethyl acrylate, and phenethyl methacrylate.

Among these, alkyl (meth)acrylates with an alkyl group having 1 to 18 carbon atoms such as methyl (meth)acrylate, ethyl (meth)acrylate, propyl (meth)acrylate, n-butyl (meth)acrylate, and 2-ethylhexyl (meth)acrylate are preferable.

The (meth)acrylate copolymer (A1) may include a repeating unit derived from another monomer that is copolymerizable with the hydroxyl group-containing monomer and/or the (meth)acrylate monomer.

Specific examples of the other monomer include vinyl esters such as vinyl acetate and vinyl propionate; olefins such as ethylene, propylene, and isobutylene; halogenated olefins such as vinyl chloride and vinylidene chloride; styrene monomers such as styrene and α-methylstyrene; diene monomers such as butadiene, isoprene, and chloroprene; nitrile monomers such as acrylonitrile and methacrylonitrile; acrylamides such as acrylamide, N-methylacrylamide, and N,N-dimethylacrylamide; and the like. These monomers may be used either individually or in combination.

In the (meth)acrylate copolymer (A1), the content of the repeating unit derived from the hydroxyl group-containing monomer is normally 1 to 40 mass%, and preferably 3 to 20 mass% with respect to the total repeating units, and the content of the repeating unit derived from the (meth)acrylate monomer is normally 60 to 99 mass%, and preferably 80 to 97 mass% with respect to the total repeating units.

The (meth)acrylate copolymer (A1) may be produced by copolymerizing the hydroxyl group-containing monomer, the (meth)acrylate monomer, and other optional monomers by a known polymerization method.
The resulting (meth)acrylate copolymer (A1) may be any form of a random copolymer, a block copolymer, or a graft copolymer.

### (Meth)acrylate copolymer (A2)

The (meth)acrylate copolymer (A2) is a copolymer that includes an energy ray-curable unsaturated group and a repeating unit derived from a (meth)acrylate monomer in the molecule.

The (meth)acrylate copolymer (A2) may be any copolymer as long as the copolymer includes an energy ray-curable functional group and a repeating unit derived from a (meth)acrylate monomer in the molecule. Examples of the (meth)acrylate copolymer (A2) include a (meth)acrylate copolymer obtained by reacting a (meth)acrylate copolymer that includes a repeating unit derived from a functional group-containing monomer (hereinafter may be referred to as "(meth)acrylate copolymer (A3)") and an unsaturated group-containing compound that includes a substituent bonded to the functional group (i.e., a substituent that reacts with the functional group to form a chemical bond) (hereinafter may be referred to as "unsaturated group-containing compound").

The (meth)acrylate copolymer (A3) may be produced by copolymerizing a monomer mixture including the functional group-containing monomer, the (meth)acrylate monomer, and optional copolymerizable monomers by a known polymerization method.

Examples of the functional group for introducing an unsaturated group of the functional group-containing monomer include a hydroxyl group, an amino group, a substituted amino group, an amide group, a substituted amide group, an epoxy group, and the like.

Specific examples of the functional group-containing monomer include hydroxyl group-containing acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; amino group or substituted amino group-containing (meth)acrylates such as aminoethyl (meth)acrylate and t-butylaminoethyl (meth)acrylate; amide group or substituted amide group-containing (meth)acrylates such as acrylamide, methacrylamide, N-methylacrylamide, N-methylmethacrylamide, N-methylolacrylamide, and N-methylolmethacrylamide; epoxy group-containing (meth)acrylates such as glycidyl (meth)acrylate; and the like. These functional group-containing monomers may be used either individually or in combination.

As the (meth)acrylate monomer and the other copolymerizable monomers, the monomers used for producing the (meth)acrylate copolymer (A1) may be used.

In the (meth)acrylate copolymer (A3), the content of the repeating unit derived from the functional group-containing monomer is normally 3 to 99 mass%, preferably 5 to 40 mass%, and particularly preferably 10 to 30 mass% with respect to the total repeating units, and the content of the repeating unit derived from the (meth)acrylate monomer is normally 1 to 97 mass%, preferably 60 to 95 mass%, and more preferably 70 to 90 mass% with respect to the total repeating units.

The (meth)acrylate copolymer (A2) may be produced by reacting a mixture that includes the unsaturated group-containing compound and the (meth)acrylate copolymer (A3) that includes the functional group for introducing an unsaturated group.

The substituent of the unsaturated group-containing compound may be appropriately selected depending on the kind of the functional group of the functional group-containing monomer unit that is included in the (meth)acrylate copolymer (A3). For example, when the functional group is a hydroxyl group, an amino group, or a substituted amino group, the substituent is preferably an isocyanate group or an epoxy group. When the functional group is an epoxy group, the substituent is preferably an amino group or an aziridinyl group. Each molecule of the unsaturated group-containing compound includes one substituent.

Specific examples of the unsaturated group-containing compound include methacryloyloxyethyl isocyanate; meta-isopropenyl-α,α-dimethylbenzyl isocyanate; methacryloyl isocyanate; allyl isocyanate; an acryloyl monoisocyanate compound obtained by reacting a diisocyanate or polyisocyanate compound and hydroxyethyl (meth)acrylate; an acryloyl monoisocyanate compound obtained by reacting a diisocyanate or polyisocyanate compound, a polyol compound, and hydroxyethyl (meth)acrylate; glycidyl (meth)acrylate; 2-(1-aziridinyl)ethyl (meth)acrylate; and the like.
The unsaturated group-containing compound is normally used in an amount of 20 to 100 equivalents, and preferably 25 to 95 equivalents based on 100 equivalents of the functional group-contairung monomer.

The (meth)acrylate copolymer (A3) and the unsaturated group-containing compound are normally reacted in an organic solvent (e.g., ethyl acetate) at 10 to 70°C and normal pressure for about 12 to 48 hours in an inert gas atmosphere.

A catalyst, a polymerization inhibitor, and the like may be appropriately used in the reaction of the (meth)acrylate copolymer (A3) and the unsaturated group-containing compound. For example, when reacting the (meth)acrylate copolymer wherein the functional group is a hydroxyl group and the unsaturated group-containing compound wherein the substituent is an isocyanate group, an organotin catalyst (e.g., dibutyltin laurate) is preferably used.

The reaction conditions (e.g., reaction temperature, pressure, solvent, time, the presence or absence of a catalyst, and the kind of catalyst) may be appropriately selected depending on the particular functional group and a substituent that is bonded to the functional group (i.e., a substituent that reacts with the functional group to form a chemical bond).

Through the reaction of the (meth)acrylate copolymer (A3) and the unsaturated group-containing compound, the functional group in the side chain of the (meth)acrylate copolymer (A3) reacts with the substituent of the unsaturated group-containing compound, and the (meth)acrylate copolymer (A2) wherein the unsaturated group is introduced in the side chain is obtained.
The reaction rate between the functional group and the substituent in the above reaction is normally 70% or more, and preferably 80% or more. The (meth)acrylate copolymer may include an unreacted functional group.

As the (meth)acrylate copolymer (A), a (meth)acrylate copolymer that does not include a carboxyl group is preferably used since a pressure-sensitive adhesive sheet that exhibits more excellent durability can be obtained. When using a polycarbonate as the substrate, a carboxyl group induces a hydrolysis reaction of the polycarbonate, so that foaming and the like easily occur.

The mass average molecular weight of the (meth)acrylate copolymer (A) is 500,000 to 1,000,000, and preferably 600,000 to 800,000. If the mass average molecular weight of the (meth)acrylate copolymer (A) is less than 500,000, the pressure-sensitive adhesive layer is less cohesive. If the mass average molecular weight of the (meth)acrylate copolymer (A) exceeds 1,000,000, the content of components having a mass average molecular weight of 2,000,000 or more increases, and the adhesion of the pressure-sensitive adhesive layer to the substrate may deteriorate.

In the (meth)acrylate copolymer (A), the content of components having a mass average molecular weight of 2,000,000 or more in the polymer component is 15 mass% or less, and preferably 13 mass% or less. If the content of components having a mass average molecular weight of 2,000,000 or more exceeds 15 mass%, the pressure-sensitive adhesive layer does not sufficiently adhere to the substrate when applying the pressure-sensitive adhesive layer to the substrate by a transfer coating method. Accordingly, when cutting the pressure-sensitive adhesive sheet, the pressure-sensitive adhesive may adhere to the cutting blade at the cross section, a part of the pressure-sensitive adhesive may be removed from the substrate as the cutting blade returns, and a chip of the pressure-sensitive adhesive may occur.

For measuring the mass average molecular weight, gel permeation chromatography (GPC) using a polystyrene-reduced value may be used, for example. The content of components having a mass average molecular weight of 2,000,000 or more may be determined by calculating the retention time of components having a mass average molecular weight of 2,000,000 from the GPC chromatogram of the resulting (meth)acrylate copolymer using a calibration curve, and then calculating the content of components having a mass average molecular weight of 2,000,000 or more from the ratio of the peak area before the retention time and the peak area after the retention time.

### Energy ray polymerization initiator

The energy ray-curable pressure-sensitive adhesive composition according to one embodiment of the present invention includes the energy ray polymerization initiator as an essential component in addition to the (meth)acrylate copolymer (A).

As the energy ray polymerization initiator, a photoinitiator is used when using UV rays as the energy ray. The photoinitiator shortens the polymerization and curing time and makes it possible to reduce the dose of irradiation.

Examples of the energy ray polymerization initiator include benzophenone, acetophenone, benzoin, benzoin methyl ether, benzoin ethyl ether, benzoin isopropyl ether, benzoin isobutyl ether, benzoin benzoate, methyl benzoin benzoate, benzoin dimethyl ketal, 2,4-diethyl thioxanthone, 1-hydroxycyclohexyl phenyl ketone, benzyl diphenyl sulfide, tetramethylthiuram monosulfide, azobisisobutyronitrile, benzyl, dibenzyl, diacetyl, β-chloroanthraquinone, (2,4,6-trimethylbenzyldiphenyl)phosphine oxide, 2-benzothiazole-N,N-diethyldithiocarbamate, oligo{2-hydroxy-2-methyl-1-[4-(1-propenyl)phenyl]propanone}, and the like. These energy ray polymerization initiators may be used either individually or in combination.

The energy ray polymerization initiator is preferably used in an amount of 0.1 to 50 parts by mass, and particularly preferably 0.5 to 30 parts by mass, based on 100 parts by mass of the (meth)acrylate copolymer (A).

### Oligomer (B)

The energy ray-curable pressure-sensitive adhesive composition according to one embodiment of the present invention preferably further includes (B) an oligomer having a mass average molecular weight of 1000 to 15,000. In this case, it is possible to form an energy ray-curable pressure-sensitive adhesive layer that exhibits more excellent adhesion to a substrate sheet, and is able to be separated and removed more easily from an adherend without leaving any residual material. If the mass average molecular weight of the oligomer (B) is less than 1000, the oligomer component flows out to the surface of the pressure-sensitive adhesive, and contaminate the adherend. If the mass average molecular weight of the oligomer (B) exceeds 15,000, the pressure-sensitive adhesive layer may not sufficiently adhere to the substrate when applying the pressure-sensitive adhesive layer to the substrate by a transfer coating method.

Examples of the oligomer (B) include urethane (meth)acrylates, polyester (meth)acrylates, polyamide (meth)acrylates, poly(meth)acrylate compounds, and the like that have a weight average molecular weight of 1000 to 15,000.
These oligomers (B) may be used either individually or in combination.

Among these, a urethane (meth)acrylate that is an oligomer including a urethane bond in the repeating unit and a (meth)acryloyl group at the terminal is preferably used.
Examples of the urethane (meth)acrylate include an oligomer obtained by forming a urethane oligomer through the reaction of a diisocyanate molecule with a diol molecule that includes a hydroxyl group at the terminal (e.g., alkylene diol or polyether compound), and reacting the functional group at the terminal of the resulting urethane oligomer with a compound that includes a (meth)acryloyl group; an oligomer obtained by reacting a polyether or polyester compound that includes a hydroxyl group at the terminal with a compound that includes a (meth)acryloyl group and an isocyanate group; and the like.

As the oligomer (B), an oligomer that has a carbonic ester structure is preferably used.
Examples of the oligomer having a carbonic ester structure include polycarbonate urethane (meth)acrylates, polycarbonate polyester (meth)acrylates, and the like.

Specific examples of the oligomer (B) include an energy ray-curable oligomer having a carbonic ester structure (SHIKOH"UV-3210 EA" manufactured by Nippon Synthetic Chemical Industry Co., Ltd., mass average molecular weight: 10,000) and the like.

Among these, a compound that has a mass average molecular weight of 1000 to 15,000 and includes two or more energy ray-curable functional groups and a carbonic ester structure in the molecule is particularly preferably used as the oligomer (B). Specific examples of such a compound include a polycarbonate urethane (meth)acrylate.

The polycarbonate urethane (meth)acrylate may be produced by reacting a polycarbonate diol, a diisocyanate compound, and a hydroxyl group-containing (meth)acrylate, for example.

Examples of the polycarbonate diol used for producing the polycarbonate urethane (meth)acrylate include a polycarbonate diol obtained by transesterification of a diol (e.g., 1,4-butanediol, 1,5-pentanediol, 1,6-hexanediol, 1,9-nonanediol, 1,10-decanediol, 3-methylpentanediol, 2,4-diethylpentanediol, trimethylhexanediol, or 1,4-cyclohexanedzol) and a carbonate (e.g., ethylene carbonate, dimethyl carbonate, diethyl carbonate, di-n-propyl carbonate, diisopropyl carbonate, dibutyl carbonate, dicyclohexyl carbonate, or diphenyl carbonate).

Examples of the diisocyanate compound include tolylene diisocyanate, xylylene diisocyanate, hexamethylene diisocyanate, isophorone diisocyanate, a diisocyanate compound obtained by reacting any of these diisocyanates and a polyhydric alcohol, and the like.

Examples of the hydroxyl group-containing (meth)acrylate include 2-hydroxyethyl (meth)acrylate, 3-hydroxypropyl (meth)acrylate, 4-hydroxybutyl (meth)acrylate, polyethylene glycol mono(meth)acrylate, polypropylene glycol mono(meth)acrylate, pentaerythritol triacrylate, and the like.

The molar ratio of the polycarbonate diol, the diisocyanate compound, and the hydroxyl group-containing (meth)acrylate in the production of the polycarbonate urethane (meth)acrylate is not particularly limited. The molar ratio (OH/NCO) of the hydroxyl group (OH) of the (meth)acrylate to the isocyanate group (NCO) of the diisocyanate compound is preferably 20/100 to 80/100, and particularly preferably 40/100 to 60/100. If the molar ratio (OH/NCO) exceeds the above range, and the content of the (meth)acryloyl group in the polycarbonate urethane (meth)acrylate is too high, the cure shrinkage rate increases, and the pressure-sensitive adhesive sheet may be warped. If the content of the (meth)acryloyl group in the polycarbonate urethane (meth)acrylate is too low, the hardenability may deteriorate.

In the energy ray-curable pressure-sensitive adhesive composition according to one embodiment of the present invention, the mass ratio of the (meth)acrylate copolymer (A) to the oligomer (B) is preferably 90:10 to 50:50. If the ratio of the oligomer (B) to the (meth)acrylate copolymer (A) is too small, the adhesion of the energy ray-curable pressure-sensitive adhesive layer to the substrate sheet is not sufficiently improved. If the ratio of the oligomer (B) to the (meth)acrylate copolymer (A) is too large, the cohesive force of the energy ray-curable pressure-sensitive adhesive layer decreases. Accordingly, the oligomer component may segregate or flow out, and the energy ray-curable pressure-sensitive adhesive layer may deform.

### Other components

The energy ray-curable pressure-sensitive adhesive composition according to one embodiment of the present invention may include an additional component and a solvent in addition to the above components. Examples of the additional component include (C) a (meth)acrylate monomer having an alicyclic structure, a crosslinking agent, other energy ray-curable resins, and other additives.

The (meth)acrylate monomer (C) having an alicyclic structure has an effect of reducing corrosiveness to metals. When a stamper is made of metal (e.g., nickel), the (meth)acrylate monomer (C) can prevent the stamper from corrosion that is caused by the energy ray-cured layer.

Examples of the (meth)acrylate monomer (C) having an alicyclic structure include cyclohexyl (meth)acrylate, t-butylcyclohexyl (meth)acrylate, tricyclodecanedimethanol (meth)acrylate, dimethyloldicyclodecane di(meth)acrylate, dicyclopcntanyl (meth)acrylate, dicyclopentenyl oxyethyl (meth)acrylate, dicyclopentenyl (meth)acrylate, isobornyl (meth)acrylate, cyclohexanedimethanol di(meth)acrylate, and the like.

As the crosslinking agent, a polyfunctional compound that is reactive with the functional groups of the (meth)acrylate monomer (A) and the like may be used.
Examples of the polyfunctional compound include an isocyanate compound, an epoxy compound, an amine compound, a melamine compound, an aziridine compound, a hydrazine compound, an aldehyde compound, an oxazoline compound, a metal alkoxide compound, a metal chelate compound, a metal salt, an ammonium salt, a reactive phenol resin, and the like.

Examples of the isocyanate compound include aromatic polyisocyanates such as tolylene diisocyanate, diphenylmethane diisocyanate, and xylylene diisocyanate; alicyclic isocyanate compounds such as dicyclohexylmethane-4,4'-diisocyanate, bicycloheptane triisocyanate, cyclopentylene diisocyanate, cyclohexylene diisocyanate, methylcyclohexylene diisocyanate, and hydrogenated xylylene diisocyanate; and aliphatic isocyanates such as hexamethylene diisocyanate, trimethylhexamethylene diisocyanate, and lysine diisocyanate.
Also, modified forms such as a biuret or isocyanurate form of the above compounds and an adduct form that is a reaction product of any of the above compounds and a non-aromatic low-molecular-weight compound that contains active hydrogen (e.g., ethylene glycol, trimethylolpropane, or castor oil) may be used as the isocyanate compound.

Examples of the epoxy compound include ethylene glycol diglycidyl ether, 1,6-hexanediol diglycidyl ether, trimethylolpropane diglycidyl ether, diglycidylaniline, diglycidylamine, N,N,N',N'-tetraglycidyl-m-xylenediamine, N,N'-diglycidylaminocyclohexane, diglycidyl cyclohexanedicarboxylate, 1,3-bis(N,N'-diglycidylaminomethyl)cyclohexane, and the like.

Examples of the aziridine compound include 2,2-bishydroxymethylbutanol-tris[3-(1-aziridinyl)propionate], 4,4-bis(ethyleneiminocarboxyamino)diphenylmethane, tris-2,4,6-(1-aziridinyl)-1,3,5-triazine, tris[1-(2-methyl)aziridinyl]phosphine oxide, hexa[1-(2-methyl)aziridinyl]triphosphatriazine, trimethylolpropane-β-aziridinyl propionate, tetramethylolmethane tri-β-aziridinyl propionate, trimethylolpropane tri-β-(2-methylaziridine)propionate, N,N'-hexamethylene-1,6-bis(1-aziridinecarboxylate), and the like.

Examples of the metal chelate compound include a metal chelate compound wherein the metal atom is aluminum, zirconium, titanium, zinc, iron, tin, or the like. Among these, an aluminum chelate compound is preferably used in terms of good properties.

Examples of the aluminum chelate compound include diisopropoxyaluminum monooleylacetoacetate, monoisopropoxyaluminum bisoleylacetoacetate, monoisopropoxyaluminum monooleate monoethylacetoacetate, diisopropoxyaluminum monolaurylacetoacetate, diisopropoxyaluminum monostearylacetoacetate, diisopropoxyaluminum monoisostearylacetoacetate, monoisopropoxyaluminum mono-N-lauroyl-β-alanate monolaurylacetoacetate, aluminum trisacetylacetonate, monoacetylacetonatoaluminum bis(isobutyl acetoacetate)chelate, monoacetylacetonatoaluminum bis(2-ethylhexyl acetoacetate)chelate, monoacetylacetonatoaluminum bis(dodecyl acetoacetate)chelate, monoacetylacetonatoaluminum bis(oleyl acetoacetate)chelate, and the like.

Examples of other metal chelate compounds include titanium tetrapropionate, titanium tetra-n-butyrate, titanium tetra-2-ethylhexanoate, zirconium-sec-butyrate, zirconium diethoxy-tert-butyrate, triethanolamine titanium dipropionate, an ammonium salt of titanium lactate, tetraoctylene glycol titanate, and the like.

The crosslinking agent can improve the strength and the like of the uncured or cured energy ray-curable pressure-sensitive adhesive layer. The crosslinking agent is preferably used in an amount of 0.001 to 30 parts by mass, and more preferably 0.01 to 15 parts by mass, based on 100 parts by mass of the (meth)acrylate copolymer (A).

Examples of the energy ray-curable resin include epoxy (meth)acrylate, silicone (meth)acrylate, and the like. The content of the energy ray-curable resin in the pressure-sensitive adhesive composition is preferably 45 mass% or less, and particularly preferably 1 to 30 mass%.

Examples of other additives include a UV absorber, a plasticizer, a filler, an antioxidant, a tackifier, a pigment, a dye, a coupling agent, and the like.

### Preparation of energy ray-curable pressure-sensitive adhesive composition

The energy ray-curable pressure-sensitive adhesive composition according to one embodiment of the present invention may be prepared by mixing and stirring the materials for the pressure-sensitive adhesive layer and an optional solvent by a known method.

Examples of the solvent include ethers such as diethyl ether, diisopropyl ether, dibutyl ether, 1,2-dimethoxyethane, tetrahydrofuran, and 1,4-dioxane; esters such as methyl acetate, ethyl acetate, propyl acetate, butyl acetate, and methyl lactate; ketones such as acetone, methyl ethyl ketone, methyl isobutyl ketone, diethyl ketone, and cyclohexanone; amides such as N.N'-dimethylformamide, N,N'-dimethylacetamide, hexamethylphosphoric acid phosphoroamide, and N-methylpyrrolidone; lactams such as ε-caprolactam; lactones such as γ-lactone and δ-lactone; sulfoxides such as dimethylsulfoxide and diethylsulfoxide; aliphatic hydrocarbons such as pentane, hexane, heptane, octane, nonane, and decane; alicyclic hydrocarbons such as cyclopentane, cyclohexane, and cyclooctane; aromatic hydrocarbons such as benzene, toluene, and xylene; halogenated hydrocarbons such as dichloromethane, chloroform, carbon tetrachloride, 1,2-dichloroethane, and chlorobenzene; mixed solvents of two or more of these solvents; and the like.

The amount of the solvent is not particularly limited. The solvent is preferably used such that the solid content of the pressure-sensitive adhesive composition is 10 to 50 mass%.

The energy ray-curable pressure-sensitive adhesive composition according to one embodiment of the present invention is useful as a material for forming an energy ray-curable pressure-sensitive adhesive layer of the stamper inspection pressure-sensitive adhesive sheet according to one embodiment of the present invention as described below.

The energy ray-curable pressure-sensitive adhesive composition according to one embodiment of the present invention can be cured by energy rays. Therefore, the energy ray-curable pressure-sensitive adhesive composition of the invention can form an energy ray-curable pressure-sensitive adhesive layer that exhibits excellent adhesion to a substrate sheet and excellent durability, and is able to be separated and removed easily from an adherend without leaving any residual material.

### 2) Stamper inspection pressure-sensitive adhesive sheet

The stamper inspection pressure-sensitive adhesive sheet according to one embodiment of the present invention (hereinafter may be referred to as "pressure-sensitive adhesive sheet of the present invention") includes a substrate sheet and an energy ray-curable pressure-sensitive adhesive layer formed on the substrate sheet using the pressure-sensitive adhesive composition according to one embodiment of the present invention.
The pressure-sensitive adhesive sheet of the present invention may be a sheet-shaped product, a long film-shaped product, or a label-shaped product.

The pressure-sensitive adhesive sheet of the present invention may be produced by (i) applying the pressure-sensitive adhesive composition according to one embodiment of the present invention to the substrate sheet to form a film of the pressure-sensitive adhesive composition, and drying the film with a hot air or the like to form an energy ray-curable pressure-sensitive adhesive layer on the substrate sheet, or (ii) applying the pressure-sensitive adhesive composition to a release sheet to form a film of the pressure-sensitive adhesive composition, drying the film with a hot air or the like to obtain a laminate wherein an energy ray-curable pressure-sensitive adhesive layer is formed on the release sheet, and then laminating the substrate sheet on the surface of the energy ray-curable pressure-sensitive adhesive layer of the resulting laminate. It is preferable to use the method (ii) in terms of ease of handling, production efficiency, and the like.

In the method (i), the pressure-sensitive adhesive composition according to one embodiment of the present invention is applied to the substrate sheet.
Examples of the substrate sheet include a film formed of a polycarbonate, polyethylene terephthalate, polyethylene naphthalate, polybutylene terephthalate, polyamide, polyacetal, modified polyphenylene oxide, polyphenylene sulfide, polysulfone, all aromatic polyester, polyether ketone, polyimide, or a mixed resin of two or more kinds of these resins. The thickness of the substrate sheet is not particularly limited. The thickness of the substrate sheet is normally about 25 to 200 micrometers.

A polycarbonate film is commonly used as a protective film for an optical recording medium in terms of optical characteristics and durability. When using a polycarbonate film as a protective film for an optical recording medium, the substrate of the pressure-sensitive adhesive sheet of the present invention is preferably a polycarbonate film in terms of using the same material and obtaining optical characteristics.

As a method of applying the pressure-sensitive adhesive composition, a method using a known coater (e.g., kiss roll coater, reverse roll coater, knife coater, dye coater, or gravure coater) may be used.

The resulting film of the pressure-sensitive adhesive composition is then dried to form an energy ray-curable pressure-sensitive adhesive layer on the substrate sheet. Thus, a two-layered laminate (i.e., the pressure-sensitive adhesive sheet of the present invention) that includes the substrate sheet and the energy ray-curable pressure-sensitive adhesive layer is obtained. The thickness of the pressure-sensitive adhesive layer is preferably 10 to 50 micrometers, and more preferably 15 to 30 micrometers. When the thickness of the pressure-sensitive adhesive layer is 10 micrometers or more, the pressure-sensitive adhesive layer sufficiently adheres to the substrate sheet. When the thickness of the pressure-sensitive adhesive layer is 50 micrometers or less, it is possible to prevent problems such as an impaired surface that may occur when the film is not sufficiently dried after applying the pressure-sensitive adhesive composition.

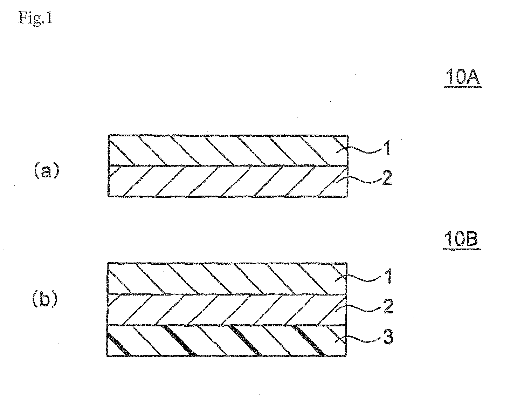

FIG. 1(a) shows a cross-sectional view of the layer configuration of the resulting laminate. In FIG. 1(a), 1 is the substrate sheet, 2 is the energy ray-curable pressure-sensitive adhesive layer, and 10A is the pressure-sensitive adhesive sheet of the present invention.

The laminate (i.e., the pressure-sensitive adhesive sheet of the present invention) obtained by the method (i) can be directly transported and stored. The pressure-sensitive adhesive sheet may also be laminated with a release sheet as described below for the purpose of protecting the surface of the energy ray-curable pressure-sensitive adhesive layer on which the substrate sheet is not laminated.

In the method (ii), the pressure-sensitive adhesive composition is applied to the release sheet to form a film of the pressure-sensitive adhesive composition, and the film is dried with a hot air or the like to obtain a laminate wherein an energy ray-curable pressure-sensitive adhesive layer is formed on the release sheet.

The release sheet may be any known release sheet. Examples of the release sheet include a resin film such as a film formed of polyethylene terephthalate, polypropylene, or the like; a sheet wherein the surface of such a resin film is subjected to a release treatment with a silicone based release agent or the like; and the like.

The release-treated side (i.e., the side that comes in contact with the energy ray-curabio pressure-sensitive adhesive layer) of the release sheet preferably has a surface roughness (Ra) of 0.1 micrometers or less so that the energy ray-curable pressure-sensitive adhesive layer has smoothness.
The thickness of the release sheet is normally about 10 to 200 micrometers, and preferably about 20 to 100 micrometers.

As the method of treating the surface of the resin film with the release agent, the method for applying the pressure-sensitive adhesive composition to the substrate sheet in the method (i) may be used.

After forming the energy ray-curable pressure-sensitive adhesive layer on the release sheet, the substrate sheet is laminated on the surface of the energy ray-curable pressure-sensitive adhesive layer of the resulting laminate. Thus, a three-layered laminate (i.e., the pressure-sensitive adhesive sheet of the present invention having a release film) including the release sheet, the energy ray-curable pressure-sensitive adhesive layer, and the substrate sheet is obtained.

FIG. 1(b) shows a cross-sectional view of the layer configuration of the obtained laminate. In FIG. 1(b), 1 is the substrate sheet, 2 is the energy ray-curable pressure-sensitive adhesive layer, 3 is the release sheet, and 10B is the pressure-sensitive adhesive sheet of the present invention provided with the release sheet.

The laminate (i.e., the pressure-sensitive adhesive sheet of the present invention having the release sheet) obtained by the method (ii) can be directly transported and stored. When the pressure-sensitive adhesive sheet of the present invention is long, the pressure-sensitive adhesive sheet can be wound into a roll, stored, and transported.

In the pressure-sensitive adhesive sheet of the present invention, the storage modulus of the uncured energy ray-curable pressure-sensitive adhesive layer at 25°C is preferably 1×10³ to 1×10⁶ Pa, and more preferably 1×10⁴ to 8×10⁵ Pa.

When the storage modulus of the uncured energy ray-curable pressure-sensitive adhesive layer is in the above range, an uneven pattern formed on a stamper is completely filled with the energy ray-curable pressure-sensitive adhesive layer only by pressing the stamper onto the energy ray-curable pressure-sensitive adhesive layer. Thus, the stamper can be easily inspected.

The storage modulus of the cured energy ray-curable pressure-sensitive adhesive layer at 25°C is preferably 1×10⁷ Pa or more, and particularly preferably 1×10⁸ to 1×10¹¹ Pa.

When the storage modulus of the cured energy ray-curable pressure-sensitive adhesive layer is in the above range, the shape of a pit or groove/land is reliably transferred to the energy ray-curable pressure-sensitive adhesive layer upon curing. Thus, the pit or groove/land is not damaged or deformed when removing the energy ray-curable pressure-sensitive adhesive layer from the stamper.

Examples of the energy ray include UV rays, electron beams, X-rays, and the like. Among these, UV rays are preferably used. UV rays and a photoinitiator shorten the polymerization and curing time, and make it possible to reduce the dose of irradiation.

The dose of energy rays varies depends on the kind of energy rays. For example, the dose of energy rays is preferably 100 to 500 mJ/cm² when using UV rays, and is preferably 10 to 1000 krad when using electron beams.

In the pressure-sensitive adhesive sheet of the present invention, the cured energy ray-curable pressure-sensitive adhesive layer exhibits excellent adhesion to the substrate sheet. Therefore, delamination of the energy ray-curable pressure-sensitive adhesive layer from the substrate sheet can be prevented.

The energy ray-curable pressure-sensitive adhesive layer included in the pressure-sensitive adhesive sheet of the present invention is easily deformed by pressure. Therefore, it is also preferable to laminate each side of the energy ray-curable pressure-sensitive adhesive layer with a release sheet in order to prevent such deformation. The release sheet may be any known release sheet. Examples of the release sheet include a release sheet wherein a resin film (e.g., a film of polyethylene terephthalate, polypropylene, or the like) is subjected to a release treatment with a silicone release agent or the like.

Since the pressure-sensitive adhesive sheet of the present invention includes the energy ray-curable pressure-sensitive adhesive layer formed of the energy ray-curable pressure-sensitive adhesive composition according to one embodiment of the present invention, the pressure-sensitive adhesive sheet exhibits excellent adhesion to a substrate sheet and excellent durability, and is able to be separated and removed easily from an adherend without leaving any residual material. Thus, the pressure-sensitive adhesive sheet of the present invention is useful as a pressure-sensitive adhesive sheet for inspecting a stamper that is used for producing optical disks (i.e., a pressure-sensitive adhesive sheet for inspecting an optical disk stamper).

Utilization of pressure-sensitive adhesive sheet for inspecting an optical disk stamper By using the pressure-sensitive adhesive sheet of the present invention for inspecting an optical disk stamper, it is possible to accurately and easily evaluate defects, an uneven pattern, depth, and the like of a stamper for producing optical disks.

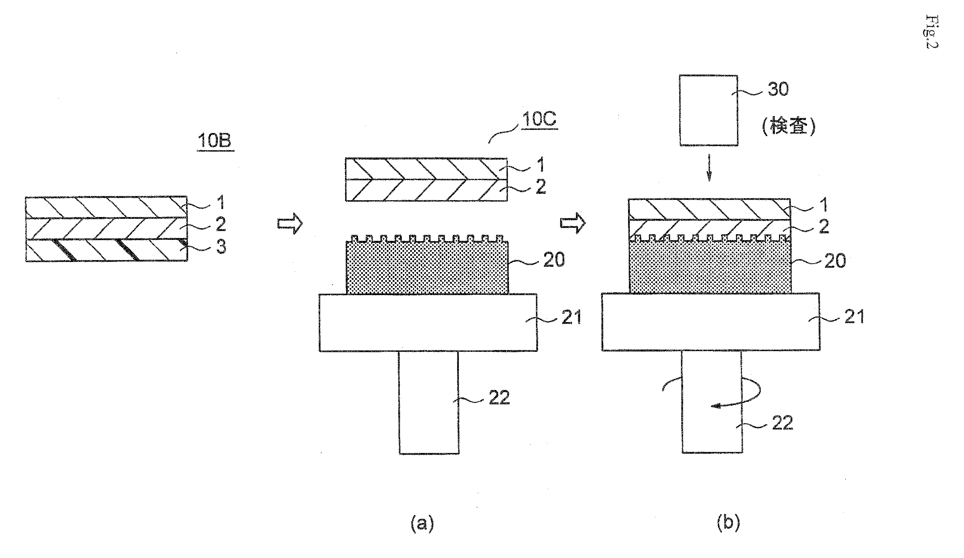

As shown in FIG. 2(a), an optical disk stamper 20 to be measured is provided on a rotary table 21 with a spindle motor 22. A release sheet 3 is removed from the pressure-sensitive adhesive sheet 10B of the present invention, and the side of the pressure-sensitive adhesive sheet (hereinafter referred to as "pressure-sensitive adhesive sheet 10C for inspection") on which the energy ray-curable pressure-sensitive adhesive layer 2 is formed is bonded to the surface of the optical disk stamper 20.

As a method for bonding the pressure-sensitive adhesive sheet 10C for inspection to the optical disk stamper 20, a vacuum method, a method using a roller, or the like may be used.

Then, as shown in FIG. 2(b), the optical disk stamper is inspected using an optical head (not shown) of an optical disk stamper inspection machine 30 while rotating the rotary table 21 with the spindle motor 22. The optical disk stamper inspection machine 30 is not particularly limited, and a known, optical disk stamper inspection machine may be used.

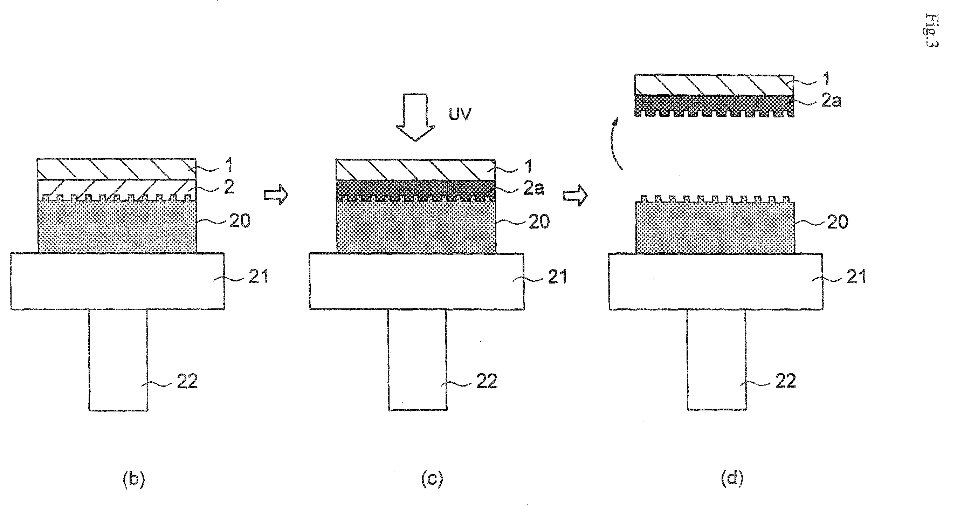

After completing the inspection, the optical disk stamper 20 may be stored for a long period of time. In such a case, as shown in FIG. 3(c), the energy ray-curable pressure-sensitive adhesive layer 2 of the pressure-sensitive adhesive sheet for inspecting an optical disk stamper is irradiated with the energy rays, and cured to form an energy ray-cured layer 2a. Accordingly, the pressure-sensitive adhesive sheet can be easily removed from the optical disk stamper 20.

The above embodiments are intended to make the present invention easily understood, and the invention is not limited by the above embodiments. Each element disclosed in the above embodiments encompasses all design choices and equivalents falling within the technical scope of the invention. For example, in the above method of inspecting an optical disk stamper, the stamper is firstly inspected, and then the energy ray-curable pressure-sensitive adhesive layer 2 of the pressure-sensitive adhesive sheet 10B is irradiated with the energy rays and cured. However, the optical disk stamper may be inspected after the energy ray-curable pressure-sensitive adhesive layer 2 that is bonded to the optical disk stamper is irradiated with the energy rays and cured.

### EXAMPLES

The present invention is further described below by way of examples and comparative examples. Note that the invention is not limited to the following examples.

### Preparation Example 1

95 parts by mass of n-butyl acrylate (manufactured by Kanto Chemical Co., Ltd.), 5 parts by mass of 2-hydroxyethyl acrylate (manufactured by Kanto Chemical Co., Ltd.), and 0.1 parts by mass of azobisisobutyronitrile (manufactured by Wako Pure Chemicals Co., Ltd.) as an initiator were added to a mixed solvent of 175 parts by mass of ethyl acetate and 25 parts by mass of toluene, and the mixture was stirred at 65°C for 17 hours to obtain a solution of an acrylate copolymer having a mass average molecular weight of 680,000 (Mw/Mn=5.3, components having a mass average molecular weight of 2,000,000 or more: 12.2 mass%). Ethyl acetate was added to the solution to prepare a solution having a solid content of 30 mass%.

### Preparation. Example 2

90 parts by mass of n-butyl acrylate, 10 parts by mass of 2-hydroxyethyl acrylate, and 0.1 parts by mass of azobisisobutyronitrile as an initiator were added to a mixed solvent of 175 parts by mass of ethyl acetate and 25 parts by mass of toluene, and the mixture was stirred at 65°C for 17 hours. The reaction solution was air-cooled to room temperature, and 6.68 parts by mass of methacryloyloxyethyl isocyanate ("Karenz MOI" manufactured by Showa Denko K.K.) and 0.004 parts by mass of dibutyltin dilaurate (manufactured by Tokyo Chemical Industry Co., Ltd.) were added to the cooled reaction solution. The mixture was stirred at room temperature for 6 hours, heated to 40°C, and further stirred for 18 hours to react with methacryloyloxyethyl isocyanate. Then a solution of an acrylate copolymer having a mass average molecular weight of 630,000 (Mw/Mn=5.6, components having a mass average molecular weight of 2,000,000 or more: 10.3 mass%) was obtained. Ethyl acetate was added to the solution to prepare a solution having a solid content of 30 mass%.

### Preparation Example 3

95 parts by mass of n-butyl acrylate, 5 parts by mass of 2-hydroxyethyl acrylate, and 0.07 parts by mass of azobisisobutyronitrile as an initiator were added to 200 parts by mass of ethyl acetate, and the mixture was stirred at 60°C for 20 hours to obtain a solution of an acrylate copolymer having a mass average molecular weight of 1,210,000 (Mw/Mn=6.2, components having a mass average molecular weight of 2,000,000 or more: 18.5 mass%). Ethyl acetate was added to the solution to prepare a solution having a solid content of 30 mass%.

### Preparation Example 4

95 parts by mass of n-butyl acrylate, 5 parts by mass of acrylic acid (manufactured by Kanto Chemical Co., Ltd.), and 0.1 parts by mass of azobisisobutyronitrile as an initiator were added to a mixed solvent of 175 parts by mass of ethyl acetate and 25 parts by mass of toluene., and the mixture was stirred at 65°C for 17 hours to obtain a solution of an acrylate copolymer having a mass average molecular weight of 590,000 (Mw/Mn=5.6, components having a mass average molecular weight of 2,000,000 or more: 9.8 mass%). Ethyl acetate was added to the solution to prepare a solution having a solid content of 30 mass%.

### Measurement of mass average molecular weight and molecular weight distribution of acrylate copolymer

### Measurement of mass average molecular weight and molecular weight distribution

The mass average molecular weight (Mw) and the molecular weight distribution (Mw/Mn) of each acrylate copolymer obtained in the above preparation examples were measured as a polystyrene-reduced value using the following apparatus and conditions.
Apparatus: HLC-8220 GPC (manufactured by Tosoh Corporation)
Column: TSKgel GMHXL → TSKgel GMHXL → TSKgel 2000 HXL
Solvent: tetrahydrofuran
Measurement temperature: 40°C
Flow rate: 1 ml/min.
Detector: differential refractometer

### Measurement of content of components having mass average molecular weight of 2,000,000 or more

The retention time of components having a mass average molecular weight of 2,000,000 was calculated from the GPC chromatogram of the (meth)acrylate copolymer obtained by the above measurement using a calibration curve, and the content of components having a mass average molecular weight of 2,000,000 or more was calculated from the ratio of the peak area before the retention time to the peak area after the retention time.

### Example 1

To 100 parts by mass of the acrylate copolymer obtained in Preparation Example 1,15 parts by mass of an energy ray-curable urethane acrylate oligomer having a carbonic ester structure ("SHICOH UV-3210 EA" manufactured by Nippon Synthetic Chemical Industry Co., Ltd., mass average molecular weight: 10,000), 1.5 parts by mass of 1-hydroxycyciohexyl phenyl ketone ("Irgacure 184" manufactured by Ciba Specialty Chemicals Co., Ltd.), and 0.5 parts by mass of an XDI polyisocyanate compound ("TD-75" manufactured by Soken Chemical & Engineering Co., Ltd.) as a crosslinking agent were added, and ethyl acetate was added to the mixture to prepare a solution (solid content: 35 mass%). The solution was used as a coating agent.

The coating agent was applied to the release-treated side of a release sheet ("SP-PET 382050" manufactured by LINTEC Corp.) with a knife coater so that the thickness of the dried film was 20 micrometers. The film was dried at 90°C for 1 minute to form an energy ray-curable pressure-sensitive adhesive layer. Then, a polycarbonate film ("PURE-ACE C110" manufactured by Teijin Chemicals Ltd., thickness: 80 micrometers) was bonded to the energy ray-curable pressure-sensitive adhesive layer to prepare Pressure-sensitive Adhesive Sheet 1 that includes the polycarbonate film as a substrate sheet.

### Example 2

Pressure-sensitive Adhesive Sheet 2 that includes a polycarbonate film as a substrate sheet was prepared by the same method as in Example 1, except that the amount of the energy ray-curable oligomer having a carbonic ester structure was changed to 30 parts by mass, and the amount of 1-hydroxycyclohexyl phenyl ketone was changed to 3.0 parts by mass.

### Example 3

Pressure-sensitive Adhesive Sheet 3 that includes a polycarbonate film as a substrate sheet was prepared by the same method as in Example 1, except that 3 parts by mass of pentaerythritol tetraacrylate ("A-TMMT" manufactured by Shin-Nakamura Chemical Co., Ltd.) was further incorporated, and the amount of 1-hydroxycyclohexyl phenyl ketone was changed to 1.8 parts by mass.

### Example 4

Pressure-sensitive Adhesive Sheet 4 that includes a polycarbonate film as a substrate sheet was prepared by the same method as in Example 1, except for using 100 parts by mass of the acrylate copolymer obtained in Preparation Example 2 instead of 100 parts by mass of the acrylate copolymer obtained in Preparation Example 1.

### Comparative Example 1

Pressure-sensitive Adhesive Sheet 5 that includes the polycarbonate film as a substrate sheet was prepared by the same method as in Example 1, except that 0.5 parts by mass of an XDI polyisocyanate compound ("TD-75" manufactured by Soken Chemical & Engineering Co., Ltd.) was added to 100 parts by mass of the acrylate copolymer obtained in Preparation Example 1, and ethyl acetate was added to the mixture to prepare a coating agent (solid content: 28 mass%).

### Comparative Example 2

Pressure-sensitive Adhesive Sheet 6 that includes the polycarbonate film as a substrate sheet was prepared by the same method as in Example 1, except for using 100 parts by mass of the acrylate copolymer obtained in Preparation Example 3 instead of 100 parts by mass of the acrylate copolymer obtained in Preparation Example 1.

### Comparative Example 3

Pressure-sensitive Adhesive Sheet 7 that includes the polycarbonate film as a substrate sheet was prepared by the same method as in Example 1, except that 100 parts by mass of the acrylate copolymer obtained in Preparation Example 4 was used instead of 100 parts by mass of the acrylate copolymer obtained in Preparation Example 1, and 1.0 parts by mass of a TDI polyisocyanate compound ("Oribain BHS-8515" manufactured by Toyo Ink Mfg. Co., Ltd.) was used instead of 0.5 parts by mass of the XDI polyisocyanate compound ("TD-75" manufactured by Soken Chemical & Engineering Co., Ltd.).

Pressure-sensitive Adhesive Sheets 1 to 7 prepared in Examples 1 to 4 and Comparative Examples 1 to 3 were evaluated by the following tests.

### Evaluation of adhesion

### Cross-cut adhesion test

The adhesion of each pressure-sensitive adhesive to a substrate was evaluated in accordance with JIS K 5400. After removing the release sheet from the prepared pressure-sensitive adhesive sheet, the pressure-sensitive adhesive layer was cut from the side with the pressure-sensitive adhesive so as not to cut the substrate. The number of squares among 25 squares that were not delaminated from the substrate was measured under the following conditions. The measurement results are shown in Table 1.

Tape: adhesive tape
Number of squares: 25 squares (interval: 2 mm)
Peel angle: 135°
Peel rate: 1 to 2 sere/10 mm

### Evaluation of cut property

5 sheets of the pressure-sensitive adhesive sheet were stacked and cut with a super cutter (manufactured by Ogino Seiki Co. Ltd.) to evaluate the practical adhesion. The cross section was observed using a loupe to examine the presence or absence and the state of a chip of the pressure-sensitive adhesive. The sheet was rated as "AAA" and evaluated as "excellent" in the case where there was no chip of the pressure-sensitive adhesive, and was rated as "BBB" and evaluated as "glue chips occurred" in the case where there were chips of the pressure-sensitive adhesive.
The observation results and the evaluation results are shown in Table 1.

### Evaluation of durability

### Evaluation test of durability before curing with UV rays

Each of Pressure-sensitive Adhesive Sheets 1 to 7 prepared in Examples 1 to 4 and Comparative Examples 1 to 3 was cut into 50 mm × 100 mm. After removing the release sheet, the pressure-sensitive adhesive sheet was bonded to soda lime glass. Then, the pressure-sensitive adhesive sheet bonded to the soda lime glass was allowed to stand in the atmosphere of 80°C and 85%RH (80°C85%RH) for 250 hours and taken out. A change in appearance was observed by the naked eye. When the surface of the pressure-sensitive adhesive and the surface of the soda lime glass were firmly bonded, and there was no foam and the like, the sheet was evaluated as "excellent", and the durability was rated as "AAA". When the surface of the pressure-sensitive adhesive and the surface of the soda lime glass were partly delaminated, and there was foam, the sheet was evaluated as "foams appeared", and the durability was rated as "BBB".
The above evaluation results are shown in Table 2.

### Evaluation test of durability after curing with UV rays

Each of Pressure-sensitive Adhesive Sheets 1 to 7 prepared in Examples 1 to 4 and Comparative Examples 1 to 3 was cut into 25 mm × 200 mm. After removing the release sheet, the pressure-sensitive adhesive sheet was bonded to soda lime glass. The pressure-sensitive adhesive sheet bonded to the soda lime glass was allowed to stand at 23°C and 50%RH for 1 week. Then, the pressure-sensitive adhesive sheet bonded to the soda lime glass was irradiated with UV rays (Electrodeless lamp (H valve) manufactured by Fusion, illuminance: 600 mW/cm², dose: 300 mJ/cm²) from the side of the substrate, and then, allowed to stand in the atmosphere of 80°C and 85%RH (80°C85%RH) for 250 hours and taken out. A change in appearance was observed by the naked eye. When the surface of the pressure-sensitive adhesive and the surface of the soda lime glass were firmly bonded, and there was no foam and the like, the sheet was evaluated as "excellent", and the durability was rated as "AAA". When the surface of the pressure-sensitive adhesive and the surface of the soda lime glass were partly delaminated, and there was foam, the sheet was evaluated as "foams appeared", and the durability was rated as "BBB".
The above evaluation results are shown in Table 2.

### Evaluation test of removability

In each of Pressure-sensitive Adhesive Sheets 1 to 7 prepared in Examples 1 to 4 and Comparative Examples 1 to 3, a release sheet was peeled off. The side of the pressure-sensitive adhesive sheet with the pressure-sensitive adhesive was bonded to the surface of a stamper with a groove (spiral groove having a track pitch of 320 nm and a depth of 45 nm) using a roller at a pressure of 500 kPa.

Immediately after the pressure-sensitive adhesive sheet was bonded to the stamper, the pressure-sensitive adhesive sheet was irradiated with UV rays (Electrodeless lamp (H valve) manufactured by Fusion, illuminance: 600 m W/cm², dose: 300 mJ/cm²) from the side of the substrate to cure the energy ray-curable pressure-sensitive adhesive layer. Separately, after the pressure-sensitive adhesive sheet was bonded to the stamper, the pressure-sensitive adhesive sheet bonded to the stamper was allowed to stand at 23°C and 50%RH (23°C50%RH) for 1 week, and the pressure-sensitive adhesive sheet was irradiated with UV rays (electrodeless lamp (H valve) manufactured by Fusion, illuminance: 600 mW/cm², dose: 300 mJ/cm²) from the side of the substrate to cure the energy ray-curable pressure-sensitive adhesive layer. (The pressure-sensitive adhesive sheet of Comparative Example 1 was not irradiated with UV rays in both cases). The adhesion of the pressure-sensitive adhesive sheet was measured using a tensile tester ("Tensilon" manufactured by Orientec Inc., peel rate: 300 mm/min, peel angle: 180°) in accordance with JIS Z0237, and residue (glue residue) on the stamper was confirmed with a magnifying glass. The sheet was rated as "AAA" in the case where there was no residue (glue residue), and rated as "BBB" in the case where there were residues (glue residues).
The evaluation results are shown in Table 3.

**TABLE 1**

| | Pressure-sensitive adhesive sheet | Adhesion | | |
|---|---|---|---|---|
| | | Cross-cut adhesion test | Cut property | Evaluation |
| Example 1 | 1 | 25/25 | Excellent | AAA |
| Example 2 | 2 | 25/25 | Excellent | AAA |
| Example 3 | 3 | 25/25 | Excellent | AAA |
| Example 4 | 4 | 25/25 | Excellent | AAA |
| Comparative Example 1 | 5 | 0/25 | Glue chips occurred | BBB |
| Comparative Example 2 | 6 | 5/25 | Glue chips occurred | BBB |
| Comparative Example 3 | 7 | 25/25 | Excellent | AAA |

**TABLE2**

| | Pressure-sensitive adhesive sheet | Durability (before curing with UV rays) | | Durability (after curing with UV rays) | |
|---|---|---|---|---|---|
| | | 80°C85%RH | Evaluation | 80°C85%RH | Evaluation |
| Example | 1 | Excellent | AAA | Excellent | AAA |
| Example 2 | 2 | Excellent | AAA | Excellent | AAA |
| Example 3 | 3 | Excellent | AAA | Excellent | AAA |
| Example 4 | 4 | Excellent | AAA | Excellent | AAA |
| Comparative Example 1 | 5 | Excellent | AAA | - | - |
| Comparative Example 2 | 6 | Excellent | AAA | Excellent | AAA |
| Comparative Example 3 | 7 | Foams appeared | BBB | Foams appeared | BBB |

**TABLE3**

| | Pressure-sensitive adhesive sheet | Removability | | | | | |
|---|---|---|---|---|---|---|---|
| | | Immediately after bonding | | | After 23°C50%RH for 1 week | | |
| | | Adhesion (N/25 mm) | Glue residue | Evaluation | Adhesion (N/25 mm) | Glue residue | Evaluation |
| Example 1 | 1 | 0.60 | None | AAA | 0.62 | None | AAA |
| Example 2 | 2 | 0.44 | None | AAA | 0.43 | None | AAA |
| Example 3 | 3 | 0.27 | None | AAA | 0.25 | None | AAA |
| Example 4 | 4 | 0.26 | None | AAA | 0.28 | None | AAA |
| Comparative Example 1 | 5 | 5.20 | Occurred | BBB | 7.10 | Occurred | BBB |
| Comparative Example 2 | 6 | 2.85 | Occurred | BBB | 4.50 | Occurred | BBB |
| Comparative Example 3 | 7 | 12.10 | Occurred | BBB | 20.10 cf | Occurred | BBB |

| | | | | | | | |
|---|---|---|---|---|---|---|---|
| cf : cohesive failure | | | | | | | |

As shown in Tables 1 to 3, the pressure-sensitive adhesive sheets of Examples 1 to 4 exhibited excellent adhesion, durability, and removability.
On the other hand, Pressure-sensitive Adhesive Sheet 5 of Comparative Example 1 obtained using the pressure-sensitive adhesive composition that did not include an energy ray-curable oligomer and Pressure-sensitive Adhesive Sheet 6 of Comparative Example 2 obtained using the pressure-sensitive adhesive composition including the acrylate copolymer having a mass average molecular weight of 1,210,000, wherein the content of components having a mass average molecular weight of 2,000,000 or more was 18.5 %, exhibited excellent durability, but exhibited poor adhesion and removability.
Pressure-sensitive Adhesive Sheet 7 of Comparative Example 3 obtained using the pressure-sensitive adhesive composition including the acrylate copolymer with a carboxyl group wherein a hydroxyl group and an energy ray-curable functional group were not incorporated exhibited excellent adhesion, but exhibited poor durability and removability.

### LIST OF REFERENCE SYMBOLS

1: substrate sheet, 2: energy ray-curable pressure-sensitive adhesive layer, 2a: energy ray-cured layer, 3: release sheet, 10A: pressure-sensitive adhesive sheet according to one embodiment of the present invention, 10B: pressure-sensitive adhesive sheet with a release sheet according to one embodiment of the present invention, 20: optical disk stamper, 21: rotary table, 22: spindle motor, 30: optical disk stamper inspection machine

## Claims

1. An energy ray-curable pressure-sensitive adhesive composition comprising a polymer component and an energy ray polymerization initiator, the polymer component being (A) a (meth)acrylate copolymer that includes a hydroxyl group or an energy ray-curable functional group in its molecule and has a mass average molecular weight of 500,000 to 1,000,000, and a content of components having amass average molecular weight of 2,000,000 or more in the polymer component being 15 mass% or less.

2. The energy ray-curable pressure-sensitive adhesive composition according to claim 1, further comprising (B) an oligomer having a mass average molecular weight of 1000 to 15,000.

3. The energy ray-curable pressure-sensitive adhesive composition according to claim 2, wherein the oligomer (B) is a compound that includes two or more energy ray-curable functional groups and a carbonic ester structure in its molecule.

4. The energy ray-curable pressure-sensitive adhesive composition according to claim 2 or 3, wherein a mass ratio of the (meth)acrylate copolymer (A) to the oligomer (B) is 90:10 to 50:50.

5. The energy ray-curable pressure-sensitive adhesive composition according to any one of claims 1 to 4, further comprising a (meth)acrylate monomer having an alicyclic structure.

6. A pressure-sensitive adhesive sheet for inspecting stampers comprising a substrate sheet and an energy ray-curable pressure-sensitive adhesive layer formed on the substrate sheet using the energy ray-curable pressure-sensitive adhesive composition according to any one of claims 1 to 5.
